# FASCICULE DE BREVET EUROPEEN

(11) **EP 0 894 995 B1**
(45) Date de publication et mention de la délivrance du brevet: **14.05.2003**
(21) Numéro de dépôt: 98401894.5
(22) Date de dépôt: 24.07.1998
(51) Int. Cl.: F16F 13/10

(54) **Support antivibratoire hydraulique**
Schwingungsdämpfendes Lager
Hydraulic damping support

(30) Priorité: 01.08.1997 FR 9709876
(43) Date de publication de la demande: 03.02.1999
(73) Titulaire: HUTCHINSON, 75008 Paris (FR)
(72) Inventeur: Seynaeve, Stéphane, 49501 Grand Rapids, MI (US); Sauvat, Gilles, 28220 Cloyes Sur Loir (FR); Lor, Jean, 28200 Chateaudun (FR); Petit, Pascal, 45380 Chaincy (FR)
(74) Mandataire: Burbaud, Eric

(56) Documents cités:
- EP-A- 0 378 464
- EP-A- 0 497 708
- GB-A- 2 268 566
- PATENT ABSTRACTS OF JAPAN vol. 011, no. 172 (M-595), 3 juin 1987 & JP 62 003920 A (TOYODA GOSEI CO LTD), 9 janvier 1987

## Description

La présente invention est relative aux supports antivibratoires hydrauliques.

Plus particulièrement, l'invention concerne un support antivibratoire hydraulique, destiné à être interposé entre deux éléments rigides pour amortir des vibrations entre ces deux éléments, ce support comportant :
- des première et deuxième armatures rigides, solidarisables respectivement avec les deux éléments rigides à réunir,
- et un corps en élastomère qui comporte une paroi épaisse reliant entre elles les deux armatures rigides et délimitant partiellement au moins une première chambre hydraulique qui fait partie d'un ensemble hydraulique rempli de liquide, cet ensemble hydraulique étant obturé de façon étanche par un élément de fermeture maintenu en place par sertissage d'au moins un organe de rétention en acier appartenant à la première armature.

Un tel support antivibratoire hydraulique est divulgué par exemple dans le document EP-A-0 497 708, où la première armature est une pièce emboutie entièrement réalisée en acier.

Les supports antivibratoires hydrauliques connus de ce type donnent toute satisfaction, mais présentent néanmoins des limitations quant à la géométrie de la première armature, du fait du procédé de fabrication de cette armature.

Lorsque ladite première armature doit présenter une géométrie relativement complexe, il est donc nécessaire de la réaliser en plusieurs pièces assemblées les unes aux autres, ce qui augmente le coût du support antivibratoire.

Pour éviter de réaliser la première armature en plusieurs pièces, il est par ailleurs connu de la mouler sous la forme d'une pièce unique en alliage d'aluminium.

Mais, compte tenu du fait que les alliages d'aluminium courants présentent des caractéristiques d'élongation insuffisantes pour permettre un sertissage dans de bonnes conditions, il est alors nécessaire d'utiliser des alliages d'aluminium spéciaux et/ou des procédé spéciaux de sertissage, ce qui conduit également à une augmentation du coût du support antivibratoire.

La présente invention a notamment pour but de pallier ces inconvénients.

A cet effet, selon l'invention, un support antivibratoire hydraulique du genre en question est essentiellement caractérisé en ce que la première armature comporte un corps métallique à base d'aluminium, surmoulé sur au' moins un insert en acier qui fait partiellement saillie hors dudit corps métallique et qui constitue ledit organe de rétention.

Grâce à ces dispositions, il est possible de réaliser aisément la première armature du support antivibratoire sous la forme d'une pièce monobloc, moulée par exemple en alliage d'aluminium courant, puisque c'est l'insert en acier et non le corps à base d'aluminium de cette première armature qui est serti. On peut ainsi obtenir le cas échéant une géométrie complexe de ladite première armature sans augmenter excessivement le coût du support antivibratoire.

Dans des modes de réalisation préférés de l'invention, on peut éventuellement avoir recours en outre à l'une et/ou à l'autre des dispositions suivantes :
- la paroi épaisse du corps en élastomère présente une forme de cloche qui s'étend selon un axe central entre d'une part une base annulaire et d'autre part un sommet solidarisé avec la deuxième armature, le corps de la première armature présentant une portion annulaire qui est centrée sur ledit axe et sur laquelle est adhérisée la base de la paroi épaisse du corps en élastomère, et l'insert de ladite première armature étant une couronne qui est centrée sur ledit axe et qui fait saillie à partir de la portion annulaire du corps de la première armature, à l'opposé de la paroi épaisse du corps en élastomère ;
- le corps de la première armature présente au moins un bras rigide en console qui s'étend à partir de la portion annulaire dudit corps jusqu'à une zone de fixation comportant des moyens pour solidariser la première armature avec l'un des deux éléments rigides à réunir ;
- l'ensemble hydraulique comprend en outre une deuxième chambre hydraulique qui communique avec la première chambre hydraulique par un canal étranglé et qui est séparée de ladite première chambre par une cloison rigide disposée perpendiculairement audit axe central, la deuxième chambre hydraulique étant délimitée par une membrane flexible en élastomère qui recouvre ladite cloison rigide à l'opposé de la paroi épaisse du corps élastomère, la cloison rigide et la membrane étant solidarisées avec la première armature par sertissage de la couronne en acier de ladite première armature ;
- l'insert présente une partie extérieure sertie et une partie intérieure qui s'étend dans le corps métallique de la première armature sensiblement à angle droit par rapport à ladite partie extérieure ;
- la partie intérieure de l'insert présente un organe de rétention qui fait saillie latéralement par rapport à ladite partie intérieure, pour ancrer l'insert dans le corps de la première armature ;
- la partie intérieure de l'insert présente une partie rabattue qui constitue ledit organe de rétention.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en perspective et de dessous d'un support antivibratoire hydraulique selon une forme de réalisation de l'invention,
- et la figure 2 est une vue en coupe verticale du support antivibratoire de la figure 1.

Sur les différentes figures, les mêmes références désignent des éléments identiques ou similaires.

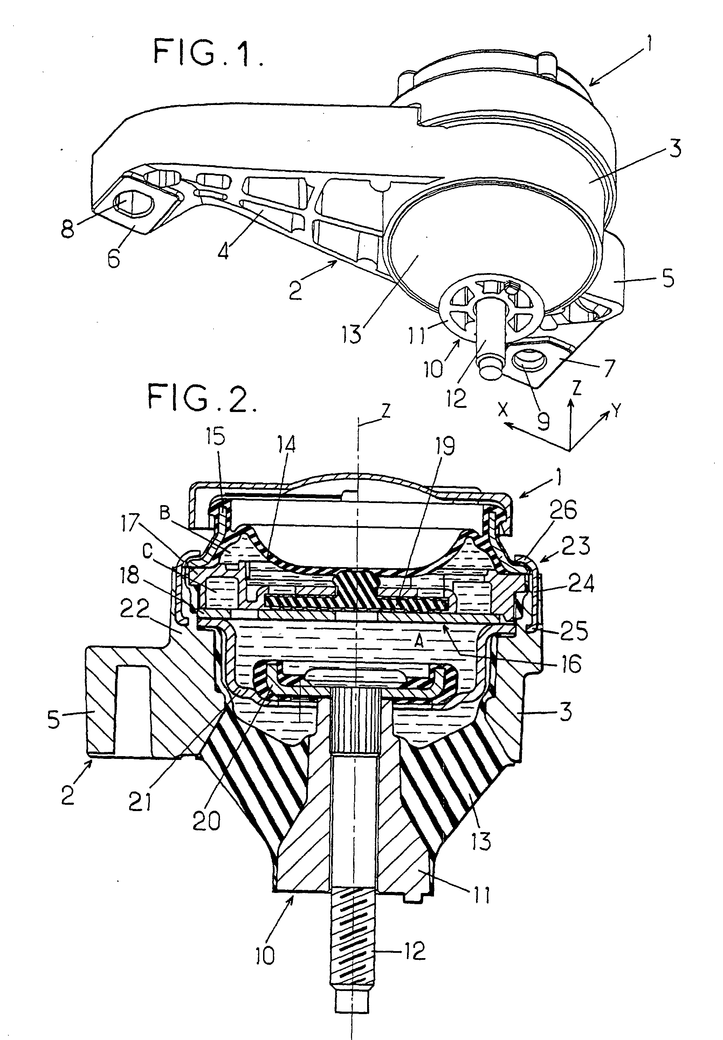

Le support antivibratoire hydraulique 1 représenté sur les figures 1 et 2 est destiné à être interposé entre deux éléments rigides tels qu'un châssis et un moteur de véhicule, pour d'une part, supporter le moteur et, d'autre part, amortir et filtrer les vibrations entre ces deux éléments, essentiellement selon un axe vertical Z, et accessoirement éventuellement selon des axes horizontaux X, Y.

A cet effet, le support antivibratoire comporte :
- une première armature rigide 2 qui comprend un anneau 3 symétrique de révolution autour de l'axe Z, cet anneau 3 étant prolongé vers l'extérieur par deux bras 4,5 en console qui s'étendent jusqu'à des platines 6,7 dotées de trous de fixation 8,9 et destinées dans le cas présent à être fixées au bloc motopropulseur du véhicule,
- une deuxième armature métallique rigide 10, constituée par exemple par un plot central 11 prolongé vers le bas par un goujon 12 destiné à être fixé dans le cas présent au châssis du véhicule (bien entendu, l'armature 10 pourrait être fixée au bloc motopropulseur et l'armature 2 au châssis du véhicule, auquel cas le support antivibratoire aurait une disposition inverse de celle représentée sur les dessins, avec son goujon 12 orienté vers le haut),
- un corps en élastomère 13 qui relie de façon étanche les deux armatures 2,10 et qui comprend une paroi épaisse en forme de cloche symétrique de révolution autour de l'axe Z, cette paroi épaisse s'étendant en divergeant vers le haut depuis un sommet adhérisé sur le plot 11 jusqu'à une base annulaire adhérisée sur l'anneau 3,
- une membrane souple 14 en élastomère, qui forme un soufflet aisément déformable et dont le pourtour est surmoulé sur une bague métallique de renfort 15, cette membrane 14 recouvrant l'anneau 3 à l'opposé du corps en élastomère 13 et étant fixée de façon étanche audit anneau 3 par sertissage, de façon à délimiter avec l'anneau 3 et le corps en élastomère 13 un boîtier étanche rempli de liquide,
- une cloison rigide 16 qui est disposée radialement et qui subdivise ledit boîtier en une chambre de travail A du côté du corps en élastomère 13 et une chambre de compensation B du côté de la membrane 14, ces deux chambrés communiquant ensemble par l'intermédiaire d'un canal étranglé C ménagé dans ladite cloison de façon à permettre des transferts de liquide entre les chambres A et B pour amortir les mouvements vibratoires de relativement grande amplitude et de relativement basse fréquence entre les armatures 2 et 10, la cloison 16 étant dans le cas présent réalisée en deux pièces 17, 18 qui forment deux grilles centrales de part et d'autre de la cloison en emprisonnant entre elles, avec un faible jeu, un clapet de découplage 19 en élastomère adapté pour filtrer les vibrations de relativement faible amplitude et de relativement grande fréquence entre les armatures 2 et 10,
- et une butée 20 qui s'étend radialement à l'intérieur de la chambre de travail A et qui est solidaire de l'armature 10, cette butée coopérant d'une part avec la cloison 16, et d'autre part, avec une plaque ajourée 21 de contrebutée pour limiter les débattements relatifs des deux armatures 2 et 10 selon l'axe Z.

Selon l'invention, l'armature 2 comprend un corps 22 moulé en alliage d'aluminium courant, qui inclut, d'une part, l'anneau 3 et, d'autre part, les bras 4,5, et qui est surmoulé sur un insert 23 en acier.

Cet insert 23 se présente, dans l'exemple considéré ici, sous la forme d'une bague cylindrique de révolution autour de l'axe Z, comprenant :
- d'une part, une partie intérieure 24 qui s'étend axialement dans le corps 22 en alliage d'aluminium, jusqu'à une extrémité inférieure 25 de préférence rabattue radialement vers l'intérieur pour ancrer l'insert 23 dans le corps 22 (cette extrémité rabattue pourrait être remplacée par tout autre organe de rétention faisant saillie radialement vers l'intérieur ou vers l'extérieur dans le corps 22),
- et d'autre part, une partie extérieure 26 qui fait saillie axialement vers le haut et qui est rabattue radialement vers l'intérieur par sertissage sur la bague de renfort 15 de la membrane 14, de façon à serrer axialement le pourtour de ladite membrane 14, les deux pièces 17,18 de la cloison 16 ainsi que la plaque ajourée 21 contre des épaulements ménagés à l'intérieur de l'anneau 3.

On peut ainsi réaliser l'armature 2 sous une forme monobloc sans avoir recours à des alliages spéciaux et coûteux.

## Revendications

1. Support antivibratoire hydraulique, destiné à être interposé entre deux éléments rigides pour amortir des vibrations entre ces deux éléments, ce support comportant :
- des première et deuxième armatures rigides (2,10), solidarisables respectivement avec les deux éléments rigides à réunir,
- et un corps en élastomère (13) qui comporte une paroi épaisse reliant entre elles les deux armatures rigides (2,10) et délimitant partiellement au moins une première chambre hydraulique (A) qui fait partie d'un ensemble hydraulique (A,B,C) rempli de liquide, cet ensemble hydraulique étant obturé de façon étanche par un élément de fermeture (14) maintenu en place par sertissage d'au moins un organe de rétention (23) en acier appartenant à la première armature (2),
**caractérisé en ce que** la première armature (2) comporte un corps métallique (22) à base d'aluminium, surmoulé sur au moins un insert (23) en acier qui fait partiellement saillie hors dudit corps métallique et qui constitue ledit organe de rétention.

2. Support antivibratoire hydraulique selon la revendication 1, dans lequel la paroi épaisse du corps en élastomère (13) présente une forme de cloche qui s'étend selon un axe central (2) entre d'une part une base annulaire et d'autre part un sommet solidarisé avec la deuxième armature (10), le corps (22) de la première armature présentant une portion annulaire (3) qui est centrée sur ledit axe (Z) et sur laquelle est adhérisée la base de la paroi épaisse du corps en élastomère, et l'insert (23) de ladite première armature étant une couronne qui est centrée sur ledit axe (Z) et qui fait saillie à partir de la portion annulaire (3) du corps de la première armature, à l'opposé de la paroi épaisse du corps en élastomère (13).

3. Support antivibratoire hydraulique selon la revendication 2, dans lequel le corps (22) de la première armature présente au moins un bras rigide (4,5) en console qui s'étend à partir de la portion annulaire (3) dudit corps jusqu'à une zone de fixation (6,7) comportant des moyens (8,9) pour solidariser la première armature (2) avec l'un des deux éléments rigides à réunir.

4. Support antivibratoire hydraulique selon l'une quelconque des revendications 2 et 3, dans lequel l'ensemble hydraulique (A,B,C) comprend en outre une deuxième chambre hydraulique (B) qui communique avec la première chambre hydraulique (A) par un canal étranglé (C) et qui est séparée de ladite première chambre par une cloison rigide (16) disposée perpendiculairement audit axe central (Z), la deuxième chambre hydraulique (B) étant délimitée par une membrane flexible (14) en élastomère qui recouvre ladite cloison rigide à l'opposé de la paroi épaisse du corps élastomère (13), la cloison rigide (16) et la membrane (14) étant solidarisées avec la première armature (2) par sertissage de la couronne en acier (23) de ladite première armature.

5. Support antivibratoire hydraulique selon l'une quelconque des revendications précédentes, dans lequel l'insert (23) présente une partie extérieure (26) sertie et une partie intérieure (24) qui s'étend dans le corps métallique (22) de la première armature sensiblement à angle droit par rapport à ladite partie extérieure (26).

6. Support antivibratoire hydraulique selon la revendication 5, dans lequel la partie intérieure (24) de l'insert présente un organe de rétention (25) qui fait saillie latéralement par rapport à ladite partie intérieure, pour ancrer l'insert (23) dans le corps (22) de la première armature.

7. Support antivibratoire hydraulique selon la revendication 6, dans lequel la partie intérieure (24) de l'insert présente une partie rabattue (25) qui constitue ledit organe de rétention.

## Patentansprüche

1. Hydraulisches schwingungsdämpfendes Lager, das dazu vorgesehen ist, zwischen zwei starren Elementen angeordnet zu werden, um Schwingungen zwischen diesen beiden Elementen zu dämpfen, wobei dieses Lager aufweist:
- eine erste und eine zweite starre Halterung (2, 10), die mit den beiden zu verbindenden starren Elementen fest verbunden werden können, und
- einen Elastomerkörper (13), der aus einer dicken Wand besteht, die die beiden starren Halterungen (2, 10) miteinander verbindet und zumindest teilweise eine erste Hydraulikkammer (A) umgrenzt, die Teil einer mit Flüssigkeit gefüllten Hydraulik-Gesamtanordnung (A, B, C) ist, wobei diese Hydraulik-Gesamtanordnung durch ein Schließelement (14), das durch Bördeln von mindestens einem Halteorgan (23) aus Stahl, das zu der ersten Halterung (2) gehört, dicht verschlossen wird,
**dadurch gekennzeichnet,**
**dass** die erste Halterung (2) aus einem Metallkörper (22) auf Aluminiumbasis besteht, der auf mindestens einen Einsatz (23) aus Stahl aufgeformt ist, welcher teilweise aus diesem Metallkörper heraussteht und das genannte Halteorgan bildet.

2. Hydraulisches schwingungsdämpfendes Lager nach Anspruch 1, bei dem die dicke Wand des Elastomerkörpers (13) die Form einer Glocke aufweist, die sich mit einer Mittelachse (Z) zwischen einer ringförmigen Basis einerseits und einer Spitze, die mit der zweiten Halterung (10) fest verbunden ist, andererseits erstreckt, wobei der Körper (22) der ersten Halterung einen ringförmigen Teil (3) aufweist, der auf dieser Achse (Z) zentriert ist und auf dem die Basis der dicken Wand des Elastomerkörpers haftet, und bei dem der Einsatz (23) dieser ersten Halterung ein Kranz ist, der auf dieser Achse (Z) zentriert ist und der von dem ringförmigen Teil (3) des Körpers der ersten Halterung aus gegenüber der dicken Wand des Elastomerkörpers (13) hervorsteht.

3. Hydraulisches schwingungsdämpfendes Lager nach Anspruch 2, bei dem der Körper (22) der ersten Halterung mindestens einen starren Konsolenarm (4, 5) aufweist, der sich von dem ringförmigen Teil (3) dieses Körpers aus bis zu einem Befestigungsbereich (6, 7) erstreckt, der mit Mitteln (8, 9) versehen ist, um die erste Halterung (2) mit einem der beiden zu verbindenden starren Elemente fest zu verbinden

4. Hydraulisches schwingungsdämpfendes Lager nach einem der Ansprüche 2 oder 3, bei dem die Hydraulik-Gesamtanordnung (A, B, C) ferner eine zweite Hydraulikkammer (B) umfasst, die mit der ersten Hydraulikkammer (A) durch einen engen Kanal (C) kommuniziert und durch eine starre, senkrecht zu der genannten Mittelachse (Z) angeordnete Trennwand (16) von dieser ersten Kammer getrennt ist, wobei die zweite Hydraulikkammer (B) durch eine bewegliche Elastomer-Membran (14) abgegrenzt wird, die die genannte starre Trennwand gegenüber der dicken Wand des Elastomerkörpers (13) überdeckt, wobei die starre Trennwand (16) und die Membran (14) mit der ersten Halterung (2) durch Bördeln des Stahlkranzes (23) dieser ersten Halterung fest verbunden ist.

5. Hydraulisches schwingungsdämpfendes Lager nach einem der vorherigen Ansprüche, bei dem der Einsatz (23) einen gebördelten äußeren Teil (26) und einen inneren Teil (24) aufweist, welcher sich in dem Metallkörper (22) der ersten Halterung im wesentlichen im rechten Winkel zu dem äußeren Teil (26) erstreckt.

6. Hydraulisches schwingungsdämpfendes Lager nach Anspruch 5, bei dem der innere Teil (24) des Einsatzes ein Halteorgan (25) aufweist, das seitlich aus dem genannten inneren Teil hervorsteht, um den Einsatz (23) in dem Körper (22) der ersten Halterung zu verankern.

7. Hydraulisches schwingungsdämpfendes Lager nach Anspruch 6, bei dem der innere Teil (24) des Einsatzes einen umgebogenen Teil (25) aufweist, der dieses Halteorgan darstellt.

## Claims

1. A hydraulic antivibration support to be interposed between two rigid elements to damp vibration between said two elements, the support comprising:
• first and second rigid strength members (2, 10) suitable for being secured respectively to the two rigid elements that are to be united; and
• an elastomer body (13) having a thick wall intercoiznecting the two rigid strength members (2, 10) and defining at least a part of a first hydraulic chamber (A) which itself forms a part of a liquid-filled hydraulic assembly (A, B, C), said hydraulic assembly being closed in sealed manner by a closure element (14) held in place by crimping at least one steel retention member (23) belonging to the first strength member (2) ;
the support **being characterized in that** the first strength member (2) comprises an aluminum-based metal body (22) overmolded on at least one steel insert (23) part of which projects from said metal body and constitutes said retention member.

2. A hydraulic antivibration support according to claim 1, in which the thick wall of the elastomer body (13) is in the form of a bell extending along a central axis (Z) between an annular base and an end secured to the second strength member (10), the body (22) of the first strength member having an annular portion (3) which is centered on said axis (Z) and on which the base of the thick wall of the elastomer body is bonded, and the insert (23) of said first strength member is an annulus which is centered on said axis (Z) and which projects from the annular portion (3) of the body of the first strength member away from the thick wall of the elastomer body (13).

3. A hydraulic antivibration support according to claim 2, in which the body (22) of the first strength member has at least one bracket-forming rigid arm (4, 5) extending from the annular portion (3) of said body to a fixing zone (6, 7) including means (8, 9) for securing the first strength member (2) to one of the two rigid elements to be united.

4. A hydraulic antivibration support according to claim 2 or 3, in which the hydraulic assembly (A, B, C) further comprises a second hydraulic chamber (B) which communicates with the first hydraulic chamber (A) via a narrow channel (C) and which is separated from said first chamber by a rigid partition (16) disposed perpendicularly to said central axis (Z), the second hydraulic chamber (B) being defined by a flexible elastomer membrane (14) which covers said rigid partition on its side remote from the thick wall of the elastomer body (13), the rigid partition (16) and the membrane (14) being secured to the first strength member (2) by crimping the steel annulus (23) of said first strength member.

5. A hydraulic antivibration support according to any preceding claim, in which the insert (23) has a crimped outer portion (26) and an inner portion (24) which extends inside the metal body (22) of the first strength member substantially at right angles relative to said outer portion (26).

6. A hydraulic antivibration support according to claim 5, in which the inner portion (24) of the insert has a retention member (25) which projects laterally from said inner portion to anchor the insert (23) in the body (22) of the first strength member.

7. A hydraulic antivibration support according to claim 6, in which the inner portion (24) of the insert has a folded-over portion (25) which constitutes said retention member.
